# FASCICULE DE BREVET EUROPEEN

(11) **EP 2 607 644 B1**
(45) Date de publication et mention de la délivrance du brevet: **01.02.2017**
(21) Numéro de dépôt: 12197831.6
(22) Date de dépôt: 18.12.2012
(51) Int. Cl.: F02B 37/18, F16K 31/54, F02M 26/54, F02M 26/70

(54) **Actionneur de contrôle moteur à crémaillère**
Zahnstangensteuerantrieb
Rack and pinion control actuator

(30) Priorité: 21.12.2011 FR 1162184
(43) Date de publication de la demande: 26.06.2013
(73) Titulaire: Valeo Systèmes de Contrôle Moteur, 95800 Cergy (FR)
(72) Inventeur: Ridolphi, Gabriel, 27150 Hacqueville (FR)
(74) Mandataire: Cardon, Nicolas

(56) Documents cités:
- EP-A1- 2 492 469
- DE-C- 439 167
- FR-A1- 2 807 977
- FR-A1- 2 917 119
- US-A- 2 608 212
- US-A- 2 753 889
- US-A1- 2011 197 863

## Description

La présente invention concerne le domaine des actionneurs de contrôle pour moteur à combustion interne. De tels actionneurs peuvent être par exemple des actionneurs de vannes de recirculation de gaz d'échappement (EGR pour « Exhaust Gaz Recirculation » en anglais), des actionneurs de régulation de pression de suralimentation à la turbine (« Waste Gate » en anglais) ou au compresseur (« Dump valve » en anglais), des actionneurs de dérivation (« by-pass » en anglais) pour un échangeur ou un dispositif de suralimentation, ou encore des actionneurs commandant tout type de volet, soupape ou clapet situés dans les circuits de gaz d'admission ou de gaz d'échappement d'un moteur à combustion interne.

L'invention a également pour objet un dispositif de régulation de la pression de suralimentation comportant un tel dispositif.

### Etat de la technique

On connaît des actionneurs de contrôle moteur à crémaillère comportant un moteur électrique, hydraulique ou pneumatique agissant sur un pignon d'entraînement d'une crémaillère. Cette crémaillère comporte une partie dentée engrenant avec le pignon et est liée en son extrémité à un organe à déplacer linéairement. Le guidage de la crémaillère est généralement assuré par deux paliers lisses situés de part et d'autre de sa partie dentée ou par une liaison glissière le long de celle-ci. Ce guidage a pour fonction de reprendre les efforts radiaux exercés par le pignon sur la crémaillère et de garantir un engrènement correct du pignon sur la partie dentée de la crémaillère en maintenant un entraxe de fonctionnement constant entre les dents des deux éléments.

On connaît de la demande FR 2 807 977, un système d'actionnement de commande d'un embrayage, à crémaillère dont le guidage est assuré par un coulisseau.

On connaît par ailleurs de la demande US 2011/0197863 un actionneur de contrôle moteur à crémaillère, la crémaillère étant guidée exclusivement en translation.

Dans le cas d'une vanne de régulation de la pression de suralimentation dans un moteur à combustion interne, un actionneur de ce type est lié à l'extrémité libre d'une manivelle de manoeuvre d'un papillon ou d'un clapet de la vanne permettant de contourner la turbine d'un turbocompresseur. Un tel dispositif permet de limiter la pression d'admission dans l'enceinte du turbocompresseur et ainsi d'en contrôler sa vitesse de rotation et donc la pression d'admission du turbocompresseur. Lors de son déplacement, l'extrémité de la manivelle de la vanne papillon décrit un arc de cercle ayant pour centre l'axe de rotation du papillon de la vanne. Un tel déplacement rend nécessaire le montage, entre la crémaillère et la manivelle de manoeuvre du papillon ou du clapet de la vanne, d'une bielle montée pour pivoter en ses deux extrémités. Ce type d'assemblage impose la réalisation de deux liaisons pivots. En raison des jeux nécessaires à leur bon fonctionnement, ces liaisons sont des foyers importants de vibrations qui peuvent se révéler gênantes en termes de sollicitations mécaniques et de bruits. Par ailleurs, la fabrication et les usinages nécessaires à la réalisation de la bielle et ses liaisons impactent fortement les coûts de fabrication.

Enfin, la fabrication de l'actionneur à crémaillère lui-même est coûteuse et complexe car elle demande d'usiner deux paliers lisses selon une tolérance d'alignement serrée.

### Objet de l'invention

Un but de l'invention est de réduire les foyers de vibrations et les coûts de réalisation d'un actionneur de contrôle moteur à crémaillère.

### Exposé de l'invention

A cet effet, on prévoit un actionneur de contrôle moteur comportant un moteur électrique ayant un arbre de sortie lié fonctionnellement à un pignon d'entraînement tournant autour d'un axe de rotation et engrenant avec une crémaillère qui est liée à un organe à déplacer de manière sensiblement linéaire selon un axe de translation. L'actionneur comporte des moyens de guidage de la crémaillère relativement au pignon d'entraînement qui sont agencés pour autoriser une inclinaison de la crémaillère autour d'un axe parallèle à l'axe de rotation du pignon d'entraînement.

On obtient ainsi un actionneur à crémaillère pourvu d'un degré de liberté en rotation autour d'un axe parallèle à l'axe de rotation du pignon d'entraînement. Dans une application à la commande d'une vanne, un tel actionneur permet de relier directement la crémaillère à la manivelle de commande du papillon (ou du clapet, ou de la soupape) d'une vanne par une unique liaison pivot. En effet, grâce à ce nouveau degré de liberté, le déplacement de l'extrémité de la crémaillère peut suivre la trajectoire de la manivelle de la vanne. Les foyers de vibrations sont réduits grâce à la réduction du nombre de pièces et du nombre de liaisons entre celles-ci. Cette réduction impacte également à la baisse les coûts de fabrication et notamment d'usinage (paliers lisses, bielle).

Selon un mode particulier de réalisation, le guidage longitudinal et transversal de la crémaillère sur le pignon d'entraînement est réalisé par le même organe.

L'invention concerne également un dispositif de régulation de la pression de suralimentation comportant un actionneur du type précité.

D'autres caractéristiques et avantages de l'invention ressortiront à la lecture de la description qui suit de modes de réalisation particuliers non limitatifs de l'invention.

D'autres caractéristiques de l'invention figurent dans les revendications dépendantes.

### Brève description des figures

Il sera fait référence aux figures annexées, parmi lesquelles :
- la figure 1 est une vue schématique d'ensemble d'un premier mode de réalisation particulier du dispositif selon l'invention, l'actionneur selon l'invention fermant une vanne telle qu'une vanne de régulation de la pression de suralimentation;
- la figure 2 est une vue schématique en coupe du dispositif du premier mode de réalisation, suivant un plan contenant les axes de rotation du train d'engrenages d'entraînement;
- la figure 3 est une vue schématique d'ensemble du dispositif selon le premier mode de réalisation, l'actionneur selon l'invention ouvrant la vanne de régulation de la pression de suralimentation ;
- la figure 4 est une vue schématique de détail du guidage entre le pignon et la crémaillère dans un dispositif selon un second mode de réalisation du dispositif selon l'invention ;
- la figure 5 est une vue schématique de détail du guidage entre le pignon et la crémaillère dans un dispositif selon un troisième mode de réalisation de l'invention ;
- la figure 6 est une vue schématique de détail du guidage entre le pignon et la crémaillère dans un dispositif selon un quatrième mode de réalisation de l'invention ;
- la figure 7 est une vue schématique de détail du guidage entre le pignon et la crémaillère dans un dispositif selon un cinquième mode de réalisation de l'invention ;
- la figure 8 est une vue schématique en coupe du système de guidage transversal dans un dispositif selon un sixième mode de réalisation de l'invention, suivant un plan contenant les axes de rotation du train d'engrenages d'entraînement.

### Description détaillée de l'invention

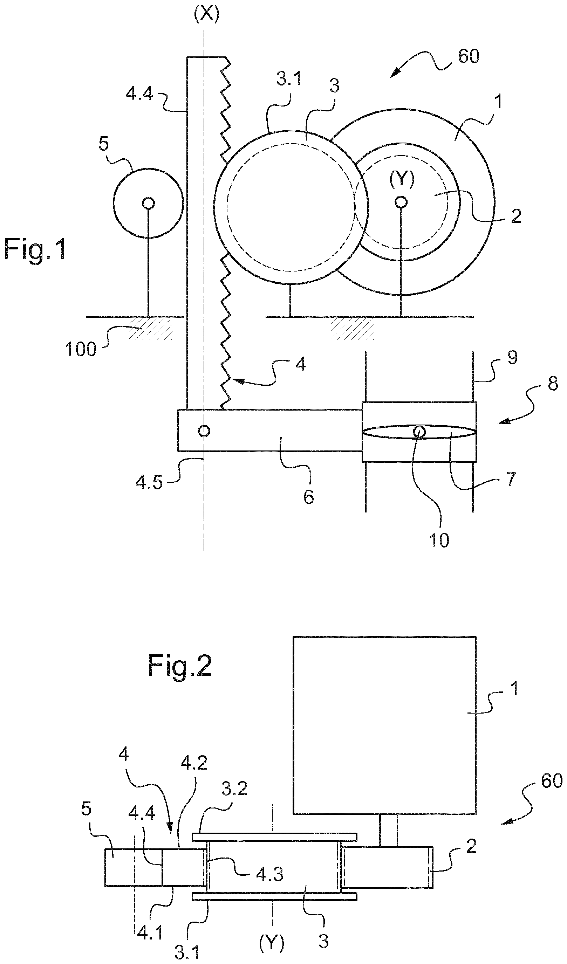

Les figures 1 à 3 représentent un actionneur de contrôle moteur 60 associé à une vanne 8 qui est, dans le présent exemple, une vanne de régulation de la pression de suralimentation. Un tel ensemble forme un dispositif de régulation de pression de suralimentation 50 qui peut être intégré à un moteur à combustion interne.

La vanne 8, connue en elle-même, comprend un corps qui est monté sur une conduite 9 de contournement de la turbine d'un dispositif de suralimentation du véhicule à moteur à combustion interne et qui reçoit à pivotement un arbre 10 porteur d'un papillon 7. L'arbre 10 a une extrémité en saillie du corps qui est liée en rotation à une manivelle 6 permettant l'actionnement du papillon 7 depuis l'extérieur du corps. En variante, le volet 7 peut être remplacé par une soupape ou un clapet.

L'actionneur 60 comprend un moteur électrique 1 solidaire d'un bâti 100. Le moteur électrique 1 entraîne un engrenage composé d'une première roue dentée 2 liée à l'arbre de sortie du moteur électrique 1 et qui engrène avec une denture d'un pignon d'entraînement 3 de diamètre supérieur à celui de la roue dentée 2, réalisant ainsi une réduction de la vitesse de rotation du moteur électrique 1.

Le pignon d'entraînement 3 est monté sur le bâti 100 pour pivoter autour d'un axe Y parallèle à l'arbre 10 de la vanne 8 et pour engrener avec une crémaillère 4 se déplaçant selon un axe longitudinal de translation X s'étendant dans un plan normal à l'axe Y. La crémaillère 4 est, ici, un barreau de section rectangulaire disposant d'une face 4.3 sur laquelle est taillée une denture coopérant avec la denture du pignon 3, une face 4.4 opposée à la face 4.3 et contenue dans un plan contenant les axes X et Y, et deux faces latérales 4.1 et 4.2 contenues dans des plans normaux à l'axe transversal Y. La crémaillère 4 est liée en une de ses extrémités 4.5 à la manivelle 6 d'actionnement du papillon 7. La jonction de l'extrémité libre 4.5 de la crémaillère 4 avec la manivelle 6 de la vanne papillon 8 est une liaison pivot qui autorise une inclinaison de la manivelle 6 relativement à la crémaillère 4 autour d'un axe parallèle à l'axe transversal Y. Cette liaison est réalisée par des moyens connus de l'homme du métier tel qu'un arbre épaulé traversant les deux pièces 4 et 6.

Un galet de roulement 5 est monté sur le bâti 100 pour pivoter autour d'un axe parallèle à l'axe Y et pour être en appui sur la face 4.4 de la crémaillère 4 opposée à la denture engrenant le pignon d'entraînement 3. Le galet 5 peut ainsi rouler sur la face 4.4 lors d'une translation de la crémaillère 4 selon l'axe longitudinal de translation X. Les axes de rotation du pignon 3 et du galet 5 sont compris dans un même plan normal à l'axe longitudinal X. L'implantation du galet 5 garantit l'entraxe d'engrènement du pignon 3 sur la crémaillère 4 et assure la reprise des efforts d'engrènement.

Le pignon 3 est, ici, pourvu de flasques latérales 3.1 et 3.2 agencées en regard des faces latérales 4.1 et 4.2 de la crémaillère 4.

En fonctionnement, le déplacement de l'extrémité de la manivelle 6 liée à la crémaillère 4 se fait selon un arc de cercle dont le centre se situe sur l'axe de l'arbre 10.

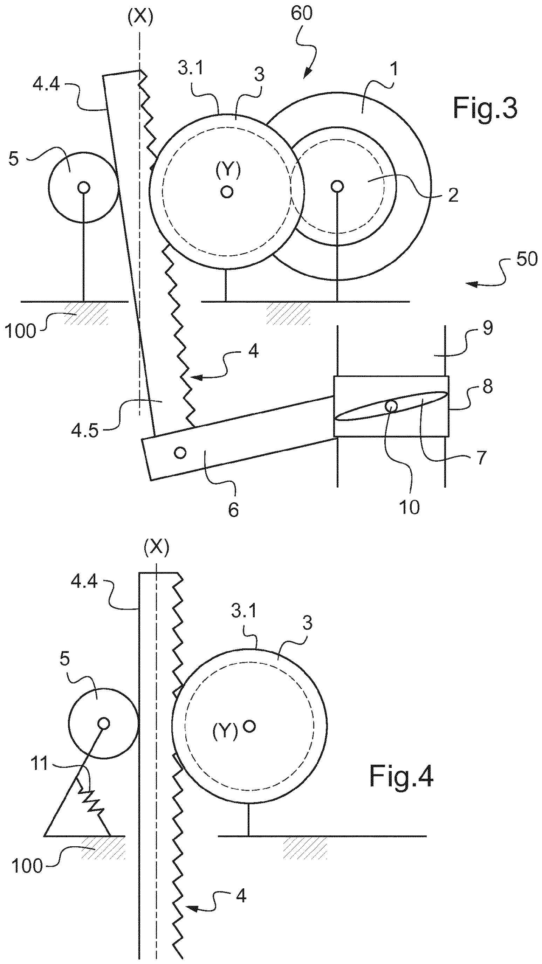

Lorsqu'une tension est appliquée aux bornes du moteur électrique 1, la rotation de l'arbre de sortie du moteur 1 entraîne la rotation du pignon d'entraînement 3 avec un rapport de réduction de vitesse équivalent au rapport des diamètres des roues dentées 2 et 3. La rotation du pignon d'entraînement 3 déplace la crémaillère 4 selon l'axe longitudinal X. Lors du déplacement de la crémaillère 4 selon cet axe, son extrémité 4.5 liée à la manivelle 6 se déplace également dans une direction comprise dans un plan normal à l'axe longitudinal X. Ce déplacement est rendu possible par le roulement de la face 4.4 de la crémaillère 4 sur le galet 5 combiné à la rotation de la face 4.3 de celle-ci relativement au pignon 3. La crémaillère 4 peut donc pivoter relativement au pignon d'entraînement 3 tout en restant engrenée sur celui-ci car l'appui linéaire du galet 5 autorise un tel mouvement. Cette situation est représentée sur la figure 3 dans laquelle les déplacements ont été exagérés afin de faciliter la compréhension.

On obtient donc un guidage de la crémaillère 4 relativement au pignon d'entraînement 3 autorisant une inclinaison de la crémaillère 4 autour d'un axe parallèle à l'axe Y de rotation du pignon d'entraînement 3.

Le guidage transversal de la crémaillère 4 selon l'axe Y relativement au pignon d'entraînement 3 est assuré par les flasques 3.1 et 3.2 de la poulie 3 s'étendant de part et d'autre de la crémaillère 4 en regard des faces 4.1 et 4.2 de celle-ci. Le déplacement transversal de la crémaillère 4 est ainsi limité à la distance séparant les faces 4.1 et 4.2 des flasques 3.1 et 3.2. Ainsi, les moyens de guidage de la crémaillère 4 sur le pignon d'entraînement 3 comprennent des moyens de guidage transversal suivant une direction parallèle à l'axe Y de rotation du pignon d'entraînement 3.

On prévoira des jeux de fonctionnement compatibles avec l'inclinaison attendue de la crémaillère 4. Ces jeux pourront être localisés au niveau de l'engrènement de la crémaillère 4 sur le pignon 3 et/ou du roulement de la crémaillère 4 sur le galet 5.

Les éléments identiques ou analogues à ceux précédemment décrits porteront une référence identique à ceux-ci dans la description qui suit des variantes des moyens de guidage de la crémaillère 4 relativement au pignon 3.

En référence à la figure 4, le galet 5 est monté sur un appui élastique 11 solidaire du bâti 100. L'appui élastique 11 amène le galet 5 au contact de la face 4.4 de la crémaillère 4. Lors de l'inclinaison de la crémaillère 4, l'appui élastique 11 autorise un déplacement du point de contact entre le galet 5 et la face 4.4 de la crémaillère. Cette solution introduit un amortissement de vibration supplémentaire tout en permettant de réduire les jeux de fonctionnement nécessaires à l'inclinaison de la crémaillère 4.

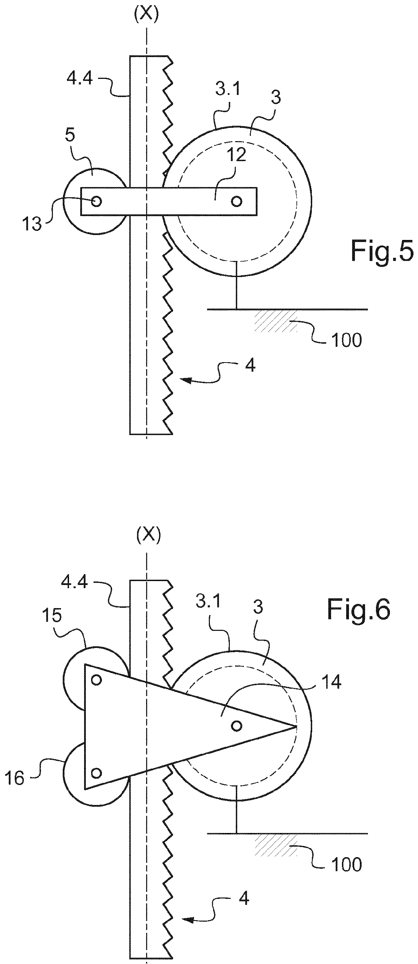

En référence à la figure 5, des bielles 12 (dont une seule est visible sur la figure) sont montées de part et d'autre de la crémaillère 4. Les bielles 12 sont montées pivotantes en l'une de leurs extrémités autour de l'axe du pignon d'entraînement 3 et portent en leur autre extrémité l'arbre 13 de rotation du galet 5. L'inclinaison de la crémaillère 4 se fait par la rotation des bielles 12 et du galet 5 autour de l'axe de rotation du pignon 3, maintenant ainsi le guidage de la crémaillère 4 par rapport au pignon d'entraînement 3.

En référence à la figure 6, chaque bielle 12 du mode de réalisation précédent est, ici, remplacée par une platine 14 en forme de triangle dont un des sommets est monté pivotant autour de l'axe du pignon d'entraînement 3 et dont les deux autres sommets portent chacun un galet de roulement 15 et 16 en contact avec la face 4.4 de la crémaillère 4. Ces deux galets sont situés de part et d'autre d'un plan qui est normal à l'axe longitudinal X et qui comprend l'axe de rotation du pignon 3. L'inclinaison de la crémaillère 4 se fait par la rotation de la platine 14 autour de l'axe de rotation du pignon 3, maintenant ainsi le guidage de la crémaillère 4 par rapport au pignon d'entraînement 3.

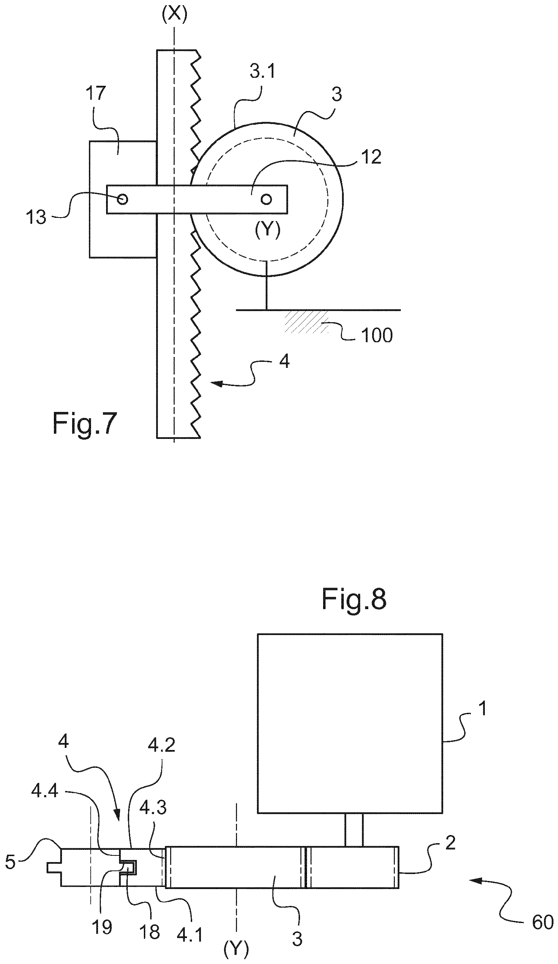

La figure 7 illustre un mode de réalisation particulier du guidage de la crémaillère 4 relativement au pignon 3 mettant en oeuvre un moyen d'appui alternatif au galet 5 sous la forme d'un patin 17 réalisé dans une matière favorable au glissement comme par exemple le polytétrafluoréthylène (PTFE) ou tout autre matériau à faible coefficient de frottement. Ce patin 17 intervient, dans ce mode de réalisation particulier, en remplacement du galet 5 du troisième mode de réalisation décrit en figure 5. Le patin 17 est monté en l'extrémité de la bielle 12 et pivote autour de l'arbre 13. L'inclinaison de la crémaillère 4 se fait par la rotation du patin 17 autour de l'axe de rotation du pignon 3, maintenant ainsi le guidage de la crémaillère 4 par rapport au pignon d'entraînement 3. Ce patin 17 peut également se substituer au galet 5 dans les autres modes de réalisation décrits aux figures 4 et 6.

En référence à la figure 8, un autre mode particulier de guidage transversal de la crémaillère 4 par rapport au pignon 3 est décrit. Le galet 5 est pourvu sur sa périphérie d'une languette de guidage 18 saillante et coopérant avec une rainure 19 réalisée dans la face 4.4 de la crémaillère 4. Cet assemblage assure le guidage transversal de la crémaillère 4 par rapport au pignon 3. En effet, le pignon 3 et le galet 5 sont soit tous deux liés au bâti 100, soit liés l'un à l'autre par la bielle 12 ou la platine triangulaire 14.

Bien entendu, l'invention n'est pas limitée aux modes de réalisation décrits mais englobe toute variante entrant dans le champ de l'invention telle que définie par les revendications. En particulier,
- bien que la réduction de la rotation de l'arbre de sortie du moteur 1 soit faite par un engrenage, l'invention s'applique également à une réduction réalisée par un train d'engrenage constitué de plusieurs roues dentées ;
- bien que les moyens d'appui de la crémaillère 4 sur le pignon d'entraînement 3 comprennent ici un galet lisse s'appuyant sur la face 4.4 de la crémaillère 4 afin de rouler sur celle-ci, le galet 5 peut être remplacé par une roue dentée coopérant avec une denture taillée sur la face d'appui 4.4 de la crémaillère 4. La denture de la crémaillère 4.4 pourrait dans ce cas être circulaire, c'est à dire que la crémaillère serait une pièce de révolution dont chaque dent fait le tour de la pièce. L'actionneur pourrait dans ce cas comporter de plus une rotule de liaison à la manivelle 6 permettant alors un degré de liberté supplémentaire ;
- bien que les moyens de guidage transversal suivant une direction parallèle à l'axe transversal Y de rotation du pignon d'entraînement 3 puissent être assurés par une languette 18 solidaire du galet de roulement 5 et une rainure 19 réalisée dans la crémaillère 4, l'invention s'applique également à une rainure réalisée dans le galet de roulement 5 et coopérant avec une languette en saillie de la crémaillère 4 ;
- bien que le moyen d'appui sur la face de la crémaillère 4 opposée à celle engrenant avec le pignon d'entraînement comprenne, ici, un galet ou un patin en PTFE, l'invention s'applique également à d'autres moyen d'appui comme par exemple des rouleaux ou des patins en bronze autolubrifiant ;
- bien qu'ici les moyens de guidage transversal de la crémaillère 4 soient des flasques 3.1 et 3.2 portés par le pignon d'entraînement 3, l'invention s'applique également à des moyens de guidage transversal portés par d'autres éléments comme par exemple des flasques portées par la crémaillère 4, le galet 5 ou le bâti 100.

## Revendications

1. Actionneur de contrôle pour moteur à combustion interne (60) comportant :
- un moteur électrique (1) ayant un arbre de sortie lié fonctionnellement à un pignon d'entraînement (3), le moteur électrique (1) entraînant un engrenage composé d'une première roue dentée (2) liée à l'arbre de sortie du moteur électrique (1) et qui engrène avec une denture d'un pignon d'entraînement (3) de diamètre supérieur à celui de la roue dentée (2), le pignon d'entraînement (3) tournant autour d'un axe de rotation (Y) et engrenant avec une crémaillère (4) qui est liée de manière sensiblement linéaire selon un axe longitudinal de translation (X), à un organe (6) à déplacer,le déplacement de l'extrémité de l'organe à déplacer (6) liée à la crémaillère (4) se fait selon un arc de cercle,
- des moyens de guidage (5, 15, 16, 17) de la crémaillère relativement au pignon d'entraînement (3), agencés pour autoriser une inclinaison de la crémaillère (4) autour d'un axe parallèle à l'axe de rotation (Y) du pignon d'entraînement (3),
**caractérisé en ce que**
les moyens de guidage (5,15,16,17) de la crémaillère sur le pignon d'entraînement comprennent au moins un moyen d'appui (5,15,16,17) sur une face (4.4) de la crémaillère (4) opposée à celle engrenant avec le pignon d'entraînement (3).

2. Actionneur (60) selon la revendication 1, dans lequel les moyens de guidage (5, 15, 16, 17) de la crémaillère relativement au pignon d'entraînement (3) sont agencés pour permettre un degré de liberté en rotation autour d'un axe parallèle à l'axe de rotation du pignon d'entraînement.

3. Actionneur (60) selon la revendication 1 ou 2, dans lequel la crémaillère (4) est reliée directement à l'organe à déplacer (6) par une unique liaison pivot.

4. Actionneur (60) selon l'une des revendications 1 à 3, dans lequel le moyen d'appui (5, 15, 16, 17) comprend un galet de roulement (5, 15, 16).

5. Actionneur (60) selon la revendication 4, dans lequel l'axe de rotation du galet de roulement (5) et l'axe de rotation (Y) du pignon d'entraînement (3) sont compris dans un plan normal à l'axe de translation (X) de la crémaillère (4).

6. Actionneur (60) selon l'une des revendications 1 à 3, dans lequel les moyens de guidage (5, 17) de la crémaillère (4) sur le pignon d'entraînement (3) comprennent des moyens de guidage transversal (18, 19) suivant une direction parallèle à l'axe (Y) de rotation du pignon d'entraînement (3).

7. Actionneur (60) selon la revendication 6, dans lequel les moyens de guidage transversal (3.1, 3.2) de la crémaillère (4) sont portés par le pignon d'entraînement (3).

8. Actionneur (60) selon la revendication 7, dans lequel les moyens de guidage transversal (18, 19) de la crémaillère (4) comprennent une rainure (18) réalisée dans la crémaillère (4).

9. Dispositif de régulation de la pression de suralimentation (50) dans un moteur à combustion interne, le dispositif comprenant :
- une vanne (8), et
- un actionneur (60) conforme à l'une quelconque des revendications précédentes, pilotant l'ouverture de la vanne (8).

## Patentansprüche

1. Steuerstellglied für einen Verbrennungsmotor (60), aufweisend:
- einen elektrischen Motor (1) mit einer Ausgangswelle, welche funktionsgemäß mit einem Antriebsritzel (3) verbunden ist, wobei der elektrische Motor (1) eine Verzahnung antreibt, welche von einem ersten Zahnrad (2) gebildet wird, welches mit der Ausgangswelle des elektrischen Motors (1) verbunden ist und welches mit einer Zahnung eines Antriebsritzels (3) mit größerem Durchmesser als demjenigen des Zahnrads (2) in Eingriff ist, wobei sich das Antriebsritzel (3) um eine Drehachse (Y) dreht und mit einer Zahnstange (4) in Eingriff steht, welche auf im Wesentlichen lineare Weise gemäß einer longitudinalen Translationsachse (X) mit einem zu verlagernden Organ (6) verbunden ist, wobei die Verlagerung des mit der Zahnstange (4) verbundenen Endes des zu verlagernden Organs (6) gemäß einem Kreisbogen erfolgt,
- Mittel (5, 15, 16, 17) zur Führung der Zahnstange in Bezug auf das Antriebsritzel (3), welche eingerichtet sind, um eine Neigung der Zahnstange (4) um eine parallel zur Drehachse (Y) des Antriebsritzels (3) verlaufende Achse zu ermöglichen,
**dadurch gekennzeichnet, dass** die Mittel (5, 15, 16, 17) zur Führung der Zahnstange an dem Antriebsritzel mindestens ein Anschlagmittel (5,15,16,17) an einer Fläche (4.4) der Zahnstange (4) aufweist, welche derjenigen gegenüber liegt, welche mit dem Antriebsritzel (3) in Eingriff ist.

2. Stellglied (60) nach Anspruch 1, bei welchem die Mittel (5, 15, 16, 17) zur Führung der Zahnstange in Bezug auf das Antriebsritzel (3) eingerichtet sind, um einen rotatorischen Freiheitsgrad um eine parallel zur Drehachse des Antriebsritzels verlaufende Achse zu ermöglichen.

3. Stellglied (60) nach Anspruch 1 oder 2, bei welchem die Zahnstange (4) direkt mit dem zu verlagernden Organ (6) durch eine einzige Drehzapfenverbindung verbunden ist.

4. Stellglied (60) nach einem der Ansprüche 1 bis 3, bei welchem das Anschlagmittel (5,15,16,17) eine Laufrolle (5, 15, 16) aufweist.

5. Stellglied (60) nach Anspruch 4, bei welchem die Drehachse der Laufrolle (5) und die Drehachse (Y) des Antriebsritzels (3) in einer Ebene senkrecht zur Translationsachse (X) der Zahnstange (4) liegen.

6. Stellglied (60) nach einem der Ansprüche 1 bis 3, bei welchem die Mittel (5, 17) zur Führung der Zahnstange (4) an dem Antriebsritzel (3) Mittel zur transversalen Führung (18, 19) gemäß einer Richtung parallel zur Drehachse (Y) des Antriebsritzels (3) aufweisen.

7. Stellglied (60) nach Anspruch 6, bei welchem die Mittel zur transversalen Führung (3.1, 3.2) der Zahnstange (4) von dem Antriebsritzel (3) getragen werden.

8. Stellglied (60) nach Anspruch 7, bei welchem die Mittel zur transversalen Führung (18, 19) der Zahnstange (4) eine in der Zahnstange (4) ausgeführte Nut (18) aufweisen.

9. Vorrichtung zur Regulierung des Ladedrucks (50) in einem Verbrennungsmotor, wobei die Vorrichtung Folgendes aufweist:
- ein Ventil (8), und
- ein Stellglied (60) gemäß einem der vorhergehenden Ansprüche, welches das Öffnen des Ventils (8) steuert.

## Claims

1. Control actuator for an internal combustion engine (60), comprising:
- an electric motor (1) having an output shaft functionally connected to a drive pinion (3), the electric motor (1) driving gearing made up of a first gearwheel (2) connected to the output shaft of the electric motor (1) and which meshes with a toothset of a drive pinion (3) of diameter greater than that of the gearwheel (2), the drive pinion (3) rotating about an axis of rotation (Y) and meshing with a rack (4) which is connected in a substantially linear manner along a longitudinal axis of translation (X) to a member (6) that is to be moved, the movement of the end of the member (6) that is to be moved, which end is connected to the rack (4), being in an arc of a circle,
- guide means (5, 15, 16, 17) for guiding the rack relative to the drive pinion (3) and arranged to allow the rack (4) an angle of inclination about an axis parallel to the axis of rotation (Y) of the drive pinion (3),
**characterized in that** the guide means (5, 15, 16, 17) for guiding the rack on the drive pinion comprise at least one bearing means (5, 15, 16, 17) pressing against a face (4.4) of the rack (4) that is the opposite face to the face that meshes with the drive pinion (3).

2. Actuator (60) according to Claim 1, in which the guide means (5, 15, 16, 17) that guide the rack relative to the drive pinion (3) are arranged in such a way as to allow a degree of freedom in rotation about an axis parallel to the axis of rotation of the drive pinion.

3. Actuator (60) according to Claim 1 or 2, in which the rack (4) is connected directly to the member (6) that is to be moved via a single pivot connection.

4. Actuator (60) according to one of Claims 1 to 3, in which the bearing means (5, 15, 16, 17) comprises a bearing roller (5, 15, 16).

5. Actuator (60) according to Claim 4, in which the axis of rotation of the bearing roller (5) and the axis of rotation (Y) of the drive pinion (3) are contained in a plane normal to the axis of translation (X) of the rack (4).

6. Actuator (60) according to one of Claims 1 to 3, in which the guide means (5, 17) that guide the rack (4) on the drive pinion (3) comprise transverse guide means (18, 19) guiding in a direction parallel to the axis (Y) of rotation of the drive pinion (3).

7. Actuator (60) according to Claim 6, in which the transverse guide means (3.1, 3.2) for guiding the rack (4) are borne by the drive pinion (3).

8. Actuator (60) according to Claim 7, in which the transverse guide means (18, 19) for guiding the rack (4) comprise a groove (18) made in the rack (4).

9. Device for regulating the boost pressure (50) in an internal combustion engine, the device comprising:
- a valve (8), and
- an actuator (60) according to any one of the preceding claims, controlling the opening of the valve (8).
